# EUROPEAN PATENT SPECIFICATION

(11) **EP 1 459 418 B1**
(45) Date of publication and mention of the grant of the patent: **25.05.2005**
(21) Application number: 02789013.6
(22) Date of filing: 17.12.2002
(51) Int. Cl.: H02B 1/36

(54) **METHOD FOR ARRANGING A SWITCHBOARD INSTALLATION SUITABLE FOR DISTRIBUTING ELECTRICAL POWER TO A SYSTEM OF POWER CONSUMERS**
VERFAHREN ZUR EINRICHTUNG EINER SCHALTTAFELINSTALLATION GEEIGNET ZUR VERTEILUNG ELEKTRISCHER ENERGIE FÜR EIN SYSTEM VON ENERGIEVERBRAUCHERN
PROCEDE D'AGENCEMENT D'UNE INSTALLATION DE TABLEAU DE DISTRIBUTION PERMETTANT DE DISTRIBUER DE LA PUISSANCE ELECTRIQUE A UN SYSTEME DE CONSOMMATEURS DE PUISSANCE

(30) Priority: 24.12.2001 NL 1019653
(43) Date of publication of application: 22.09.2004
(73) Proprietor: Eaton Electric N.V., 7559 SC Hengelo (NL)
(72) Inventor: VAN DIJL, Gerrit, NL-7482 VZ Haaksbergen (NL)
(74) Representative: Valkonet, Rutger
(86) International application number: PCT/NL2002/000835
(87) International publication number: WO 2003/056672

(56) References cited:
- DE-A- 10 013 037
- FR-A- 2 670 597
- US-B1- 6 205 019

## Description

The invention relates to a method for arranging a switchboard installation suitable for distributing electrical power to a system of power consumers forming part of one or more electrical circuits, to which end the switchboard installation is built up of a number of electrical modules arranged in a specific combination, which may or may not be present in compartments of a switchboard configuration, for example a switchboard cabinet, which modules influence the operating temperature in the switchboard installation by generating and emitting heat.

Power consumers exist in various types thereof, for example motors, heating elements, lighting fixtures, etc, and consequently said consumers will differ from each other as regards the energy requirements, manner of protection, control etc. Consequently, the power supply, control and protection units etc are generally accommodated in separate switching and/or distribution units for each individual consumer, and the switchboard installation is thus built up of a number of different types of electrical switching and/or distribution units, which may in turn be accommodated in one or more switchboard cabinets.

Such switchboard installations, also called control and distribution installations, are widely used in electrical installations, both low-voltage and medium-voltage installations, in which the number, the type and also the composition (also called the configuration) of the various types of switching and/or distribution units that are used can be fully adapted to the user's requirements. In order to limit the number of variants that are possible in this connection, standard units, also called modules or drawers, are generally used for the various types of switching and/or distribution units. For the sake of clarity, the switching and/or distribution units will be called modules or module hereinafter. Another result of this standardisation is that it will become easier to exchange, modify and/or extend the installation.

A further limitation of the number of variants is furthermore achieved by laying down standard values as much as possible as regards the power values that the modules must be capable of switching. The modules are generally accommodated in one or more switchboard cabinets, which are combined to form the switchboard installation.

In use, the current passing through a module for supplying power to a consumer will cause so-called watt losses due to the electrical resistance of the components that form part of said module. In use, the watt losses in said modules influence the temperature not only in the module in question but also in the rest of the switchboard installation by generating and emitting heat. Since the modules in such a switchboard installation are temperature-critical components and/or materials, such as thermal relays, electronic components, thermoplastic materials and the like, said components and/or materials in fact determine the maximum allowable heat development and thus also the maximum allowable electrical loadability of the modules, of the switchboard cabinet and eventually of the entire installation.

Consequently, it is very desirable to have a proper insight into the temperature management in the switchboard installation in order to prevent the life of the installation being adversely affected or failures occurring. In addition to that, on financial grounds the aim is in general to realise the highest possible space factor in the switchboard installation, i.e. it is attempted to use a minimum number of modules and/or switchboard cabinets for the total electric power needed for a switchboard installation. This means that the power value for each module and/or switchboard increases, and thus also the amount of heat that is generated, which likewise requires a proper insight into the temperature management.

Physical cooling measures may be provided in the form of fins, air gaps, fans and the like. International standards, however, require that particular switchboard installations, for example installations used in the petrochemical industry, be gastight, watertight and/or dustproof, as a consequence of which especially ventilation of the switchboard installation for cooling purposes is out of the question.

A practical or empirical possibility of obtaining this insight is to arrange a switchboard installation comprising a particular combination of modules, and subsequently monitor the temperature development in use. Thus it can be examined whether the configuration being used and the resulting temperature development has an adverse affect on the functioning and the optimum usability of the switchboard installation as a whole.

Due to its "trial and error" nature and the large number of possible configurations of modules in the switchboard installation, the above approach is time-consuming and thus rather unattractive, however. Consequently, the so-called "derating" is frequently used in practice. This implies that, for reasons of safety, the total power value of a module is reduced, so that also the total amount of current passing through that module and consequently also the amount of heat being generated within said module will decrease. As a result, the extent to which heat is generated will indeed decrease, but the space factor will be adversely affected as well. After all, more modules will be required to accommodate the total installed power of the switchboard installation in question, which in turn will raise the cost of that installation.

Another purely theoretical solution for obtaining an insight into the temperature management for the purpose of achieving an optimum configuration of the switchboard cabinet is to consider the components and the parts present within the switchboard cabinet and the modules as a system of heat sources and thermal resistors, which can be reduced to a thermal model, on the basis of which it is possible to derive the change in the temperature that will occur in each of the modules in the switchboard cabinet in use.

In order to approach the temperature management and the temperature development as it actually occurs in a particular switchboard installation in use as optimally as possible, this theoretical solution makes it necessary to reduce all the components and parts in the switchboard installation, and thus in every type of module and/or switchboard cabinet, to a heat source and/or a thermal resistor. Within this framework, at least every conductor and every electrical component must be considered to be a heat source, whilst a distinction must be made for every heat resistor between a conduction-type resistor, a convection-type resistor and a radiation-type resistor. Although a reasonably satisfactory approach as regards the temperature management in the switchboard installation can be obtained by thus reducing the switchboard cabinet and every type of module to a system of thermal factors, it will be necessary to incorporate correction factors for the dimensions and the design of each module and/or switchboard cabinet in order to arrive at a more accurate approach.

For this theoretical approach it is furthermore necessary to define a number of parameters, such as the heat emission, the convection resistance, the radiation resistance, the conduction resistance etc for every component that causes watt losses. In order to obtain an acceptable degree of accuracy, a very large number of parameters must inevitably be known or measured, which will be difficult to realise in practice.

From FR-A-2670597 the modelling of the thermal behaviour of a circuit board is disclosed, said circuit board comprising a plurality of interconnected, encapsulated electronic components, the object of said modelling being to ensure that the proposed layout will function correctly under the specified operating conditions. More in particular the model of FR-A-2670597 is concentrated on providing a more accurate model of the thermal behaviour of the individual components.

The object of the invention is to obviate the above drawbacks and to provide a method by means of which a direct insight into the temperature management of a switchboard installation of any configuration can be obtained in a quick and efficient manner by carrying out a limited number of measurements.

According to the invention, the method is characterized in that each type of module of which the switchboard installation is built up is considered to be a source of heat caused by watt losses that are known in advance, whose thermal influence on the switchboard installation under nominal load conditions is laid down in temperature arrays, which temperature arrays help to form a thermal model, on the basis of which it is possible to derive the change in the temperature that will occur in each of the modules in the switchboard cabinet as being in use with any desired configuration of the switchboard installation.

In order to obtain the most optimum configuration or composition of the modules for a particular switchboard installation, the method according to the invention is characterized in that the derived temperature change is used in arranging the electrical switching and/or distribution units in the compartments of the switchboard cabinet in such a manner that a predetermined operating temperature will not be exceeded during operation when using the configuration in question. As a result, the need for several "trial and error" measurements will be fully eliminated in practice. In addition to that, the method according to the invention readily makes it possible to visualise the influence of changes in the configuration of the switchboard installation on the temperatures in said switchboard installation.

According to the invention, the partial change in the operating temperature in a switchboard installation is established at at least two different compartment locations within the switchboard installation for each type of module, and subsequently laid down in temperature arrays, for the purpose of setting up said thermal model. In the situation in which the switchboard installation is built up of one or more switchboard cabinets in which the various modules are arranged in the form of a matrix, the partial change in the operating temperature in the switchboard cabinet in question is established at at least two different compartment locations for each type of unit for the purpose of setting up said thermal model.

More specifically, each type of unit is placed in at least two compartments of the switchboard cabinet in question, the unit carrying the nominal current associated with said unit is loaded and the temperatures in the unit in question, as well as in all the other similarly sized compartments in the same vertical or horizontal row, are laid down in two arrays of measurement results.

In accordance with a further elaboration of the thermal model according to the invention, the number of measuring points for determining the temperature array corresponds at least to the number of modules that can be accommodated in the switchboard cabinet in question. In order to arrive at a more correct thermal model according to the invention, the distance between the measuring points is determined by the fixed pitch that obtains for the switchboard cabinet in question.

The invention also relates to a computer comprising input means, memory means, data storage means, data processing means, display means as well as a control program arranged for carrying out the method according to the invention, as well as to a data carrier capable of being read by a computer, which data carrier comprises a control program arranged for carrying out the method according to the invention.

The invention will now be explained in more detail with reference to a drawing, in which:
Figures 1a-1c are front views and a cutaway view, respectively, of a few embodiments of a switchboard cabinet arranged in accordance with the method according to the invention;
Figures 2, 3 and 4 are simplified thermal models, in which the method according to the invention is implemented; and
Figure 5 shows the switchboard cabinet in which the method according to the invention is implemented.

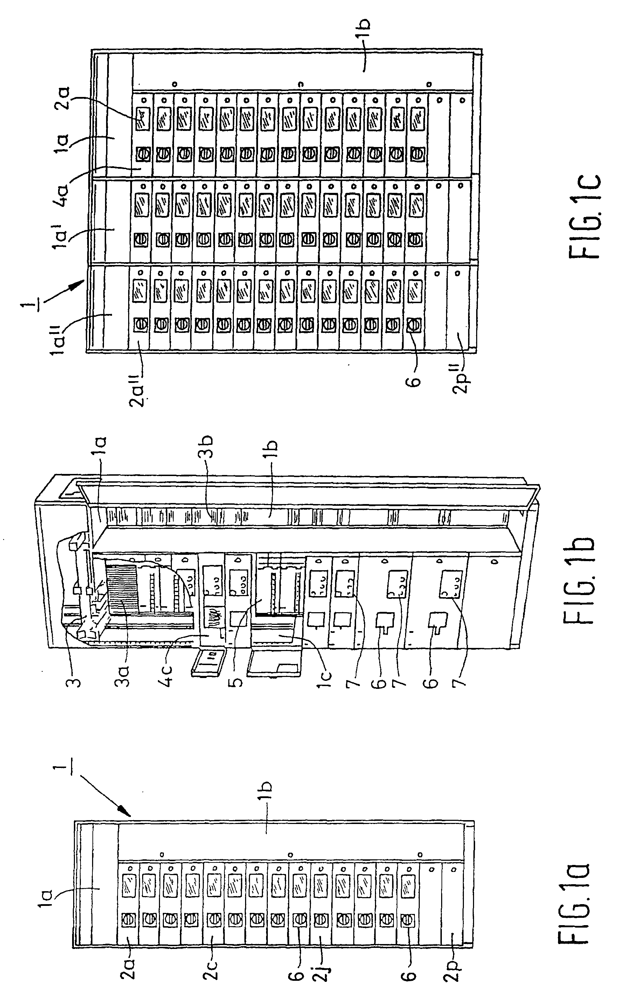

The switchboard cabinets that are shown in Figures 1a-1c are composed of a number of compartments 1a, 1b and 2a-2p. Such switchboard cabinets are used in industrial electrical installations, for example, in which they arrange the distribution of electrical power. Usually, several switchboard cabinets 1 are arranged in side-by-side abutting relationship.

Usually a supply line 3 for electrical power is arranged in the compartment la for supplying the electrical power to the (various) switchboard cabinets 1, which electrical power is distributed to the various compartments 1b and 2a-2p in the form of voltage and current signals via various lines 3a and 3b.

Each compartment 2a-2p can be fitted with a switching and/or distribution unit 4a-4p. The various units can mate with a sliding mechanism in each of the compartments, thus enabling easy fitting and removal of the units by sliding them into or out of the compartment. Each compartment is fitted with a number of contact lugs 5 for effecting a good electrical connection with the electrical supply lines 3a and 3b, which contact lugs mate with sockets (not shown) on each switching and/or distribution unit upon insertion thereof.

Figure 1c shows another, more extensive embodiment, in which the switchboard cabinet is of matrix-like design comprising three columns 1a-1a'-1a'' and compartments 2a-2p, 2a'-2p', 2a''-2p'', in which various units 4 can be accommodated.

Although they are not relevant for a proper understanding of the invention, each switching and/or distribution unit, depending on the type in question, may comprise rotary switches and the like, indicated by numerals 6 and 7 in this embodiment, by means of which each unit can be turned off or on or be set in a particular position.

As is the case with every electrical installation, the switching and/or distribution units generate heat and emit this heat into their environment. Said generation and emission of heat affects the operating temperature within the switchboard cabinet and thus partially determines the maximum loadability of the electrical installation as a whole. A high operating temperature may lead to undesirable failure of the switchboard cabinet.

In this connection it is desirable to obtain some insight into the temperature management in the switchboard cabinet during operation.

This may be done by arranging the various units 2a-2p in a particular configuration or composition in the compartments upon installation of the switchboard cabinet 1 and subsequently monitoring the temperature development during operation. The fact is that it has become apparent that different configurations lead to different temperature developments in the switchboard cabinet 1. Thus it can be examined for a specific configuration of the units 4a-4p whether the temperature development that takes place therein falls within specific desirable temperature limits as laid down in (international) standards.

As already described in broad outline in the introduction, owing to the "trial and error" nature of this approach and the large number of possible configurations of the switchboard cabinets, this solution is time-consuming and not very practical. After all, if it becomes apparent that a specific composition of the units 4a-4p in the switchboard cabinet leads to a temperature development that falls outside the relevant standards, it will be necessary to rearrange the switchboard cabinet, using a different configuration of the units 4a-4p, and subsequently monitor the temperature developments in the switchboard cabinet 1 anew. On the other hand, if said configuration has been changed as a result of maintenance, repairs or an extension, new measurements will have to be carried out on the new configuration of the switchboard cabinet.

The method according to the invention, on the contrary, makes it possible to gain a direct insight into the temperature management in a switchboard cabinet of any configuration in a quick and efficient manner. To this end, each type of module 4a-4p of which the switchboard installation is built up is considered to be a heat source caused by watt losses that are known in advance, whose thermal influence on the switchboard installation under nominal load conditions is laid down in temperature arrays, which temperature arrays help to form a thermal model, on the basis of which it is possible to derive the change in the temperature that will occur in each of the modules in the switchboard cabinet in use with any desired configuration of the switchboard installation.

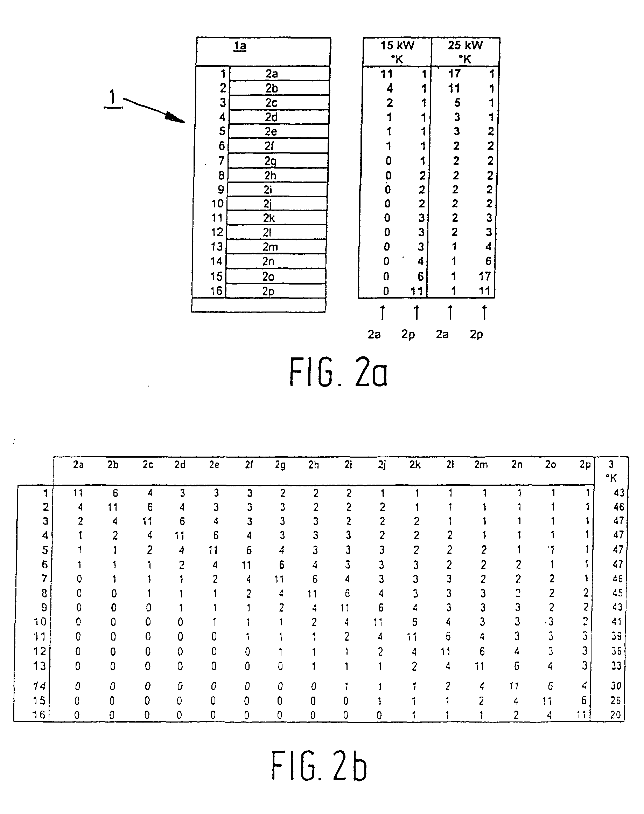

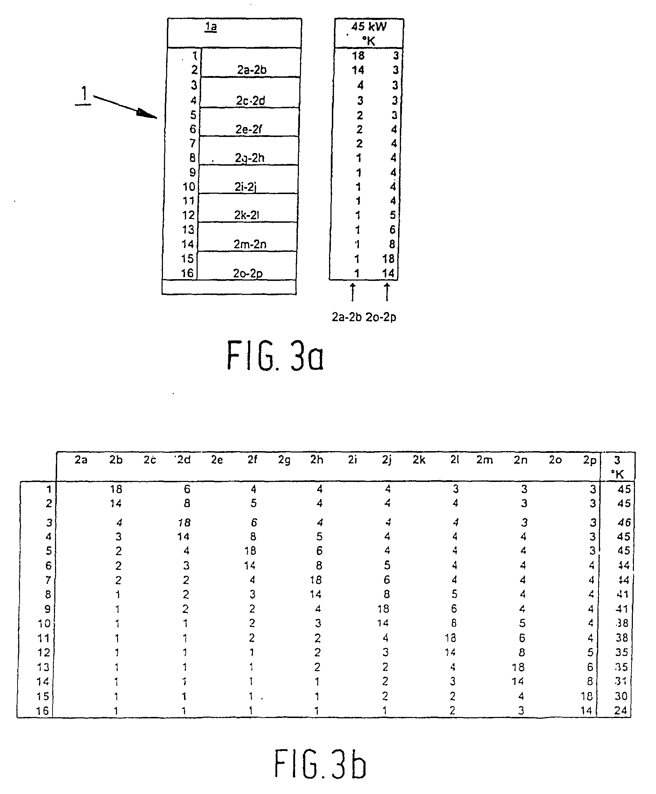

Two embodiments of said thermal model are shown in Figures 2 and 3. The overall thermal models of the switchboard cabinet, including the various units 4a-4p, can be represented in a computer-generated diagram, which consists of a system of fields subdivided into rows and columns.

Figure 2a schematically shows the switchboard cabinet 1 corresponding to Figure 1a. The switchboard cabinet 1 comprises 16 compartments 2a-2p, into which a particular module or switching and/or distribution unit 4a-4p can be placed. The specific module is characterized by its dissipated power, which power leads to watt losses during operation. In Figure 2a, the arithmetic thermal model is described with reference to two modules 4 and 4', which are designated by their dissipated power, viz. 15 kW and 25 kW in the model.

According to the invention, in order to set up the arithmetic thermal model, one module 4 (15 kW) is placed into at least two different compartments of the switchboard cabinet and loaded with the associated nominal current. For each of the two different compartments, the temperature in the compartment in question as well as that in all the other compartments, in the same vertical row in this embodiment, are laid down in arrays of measurement results, using a temperature sensor.

Two arrays of measurement series can be defined by placing the 15 KW module in the upper compartment 1 (2a) as well as in the lower compartment 16 (2p), as is shown in table 2a. The left-hand column, which relates to the 15 kW module, comprises two rows of figures. The left-hand row in the left-hand column shows the temperature increase relative to the environment upon loading of the 15 kW module in the upper compartment 2a, and the right-hand row in the left-hand column shows the temperature increase relative to the environment in each compartment when the 15 kW module in the lower compartment 2a is loaded with the nominal current.

The left-hand row shows that operation of the 15 kW module in the upper compartment 2a causes a temperature increase of 11 °K in compartment 2a, a temperature increase of 4 °K in compartment 2b positioned directly thereunder, etc. Starting with compartments 2g-2p, a significant influence on the temperature caused by the operation of the 15 kW module in the uppermost compartment 2a can no longer be observed.

Likewise, it can be derived from the right-hand row in the left-hand column that the placing and operating of the 15 kW module in the lowermost compartment 2p causes the temperature in compartment 2p to increase by 11 °K, by 4 °K in the compartment 2o directly thereabove, etc etc. Due to thermal convection, among other things, the influence on the temperature in the upper compartments is not negligible, in contrast to the situation in which the 15 kW module is present in the uppermost compartment, since the temperature in said compartments increases by one degree Kelvin yet.

The right-hand column in table 2a shows similar temperature arrays for a 25 kW module. As a result of the higher watt losses, the temperature gradients in the switchboard cabinet is different, viz. higher.

On the basis of said two temperature arrays, which are defined experimentally for each module, the arithmetic thermal model is set up, which model is shown in Figure 2b for the 15 kW module. The vertical columns of Table 2 show the temperature arrays for each compartment, the first and sixteenth of which have been defined by experiment, therefore, as shown in Figure 2a. The temperature arrays for the intermediate compartments 2b-2o are incorporated in the arithmetic model by interpolation.

Now the temperature increase that occurs in use can be determined for every compartment by adding up the temperatures in the horizontal row (shown in italics) associated with a particular compartment, for example the 14th compartment (see the leftmost column in table 2b). If a 15 kW module is present in all of the compartments 2a-2-, the temperature increase that occurs for the 14th compartment amounts to 30 °K.

Figures 3a and 3b show a similar arithmetic thermal model for a 45 kW module, which not only exhibits a higher watt loss, which leads to a higher temperature gradient across the various compartments in the switchboard cabinet, but which also has different, larger overall dimensions. In this example, each 45 kW module occupies two standard compartments 2a-2b, 2c-2d etc, and consequently a switchboard cabinet as shown in Figure 1a can be fitted with eight 45 kW modules, whereas a similar switchboard cabinet can be fitted with 16 15 kW or 25 kW modules, as shown in Figures 2a-2b.

The temperature array for the 45 kW module can be incorporated in the arithmetic thermal module in a similar manner, and thus the temperature increase can be determined for each compartment. Thus, the temperature in the third compartment 2c of the configuration of the switchboard cabinet as shown in Figure 3a increases by 46 °K.

It is also possible, using said arithmetic model, to calculate a particular configuration of different units 4a-4p in the switchboard cabinet 1 so as to gain an insight into the temperature developments in the switchboard cabinet 1. If it should appear from said calculation that the configuration 4a-4p leads to a high operating temperature that falls outside the limits laid down in (international) standards and guidelines, the order or the configuration of the units 4a-4p can simply be rejected in the arithmetic model. If it should appear, after example, that the composition 4a-4b-4c..4p leads to an undesirable operating temperature that runs up too high, a large number of other configurations can be calculated, using a small number of changes in the thermal model, so that it is actually possible to achieve an acceptable increase in the operating temperature by using the configuration 4a-4d-4c-4b-4h-4g-4i etc, for example.

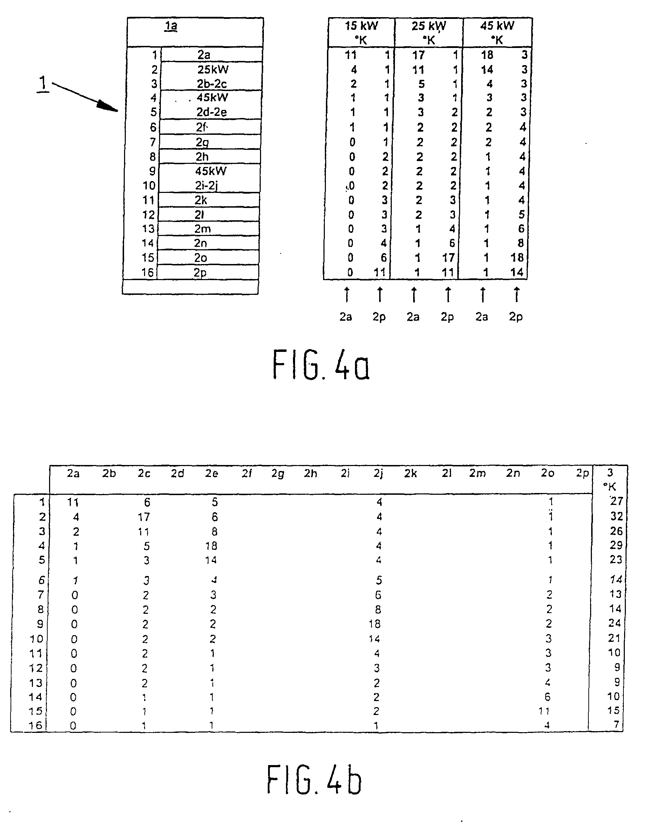

Such an implementation is shown in Figures 4a-4b, in which the switchboard cabinet is composed of three different modules, in this case the 15 kW, 25 kW and 45 kW modules of the preceding examples. The desired temperature distribution in the switchboard cabinet can be obtained by using a correct orientation. Thus, the 15 kW modules are located in compartments 2a and 2o, whereas one 25 kW module occupies two compartments 2b-2c and two 45 kW modules are present in the compartments 2d-2e and 2i-2j. All this leads to the arithmetic thermal model as shown in table 4b, in which the temperature in the sixth compartment 2f (shown in italics) increases by 14 °K.

Furthermore correction factors, for example relating to specific dimensions or to the construction of the switchboard cabinet and the compartments 4, can be incorporated in the thermal model. In this connection additional insulating panels, thermal bridges or ventilation grilles, which help to influence the temperature management, may be considered. Also the rail systems for supplying power to the various modules in the switchboard cabinet may have a significant influence on the temperature management in the switchboard cabinet. Correction factors for these influences may be incorporated in the arithmetic model.

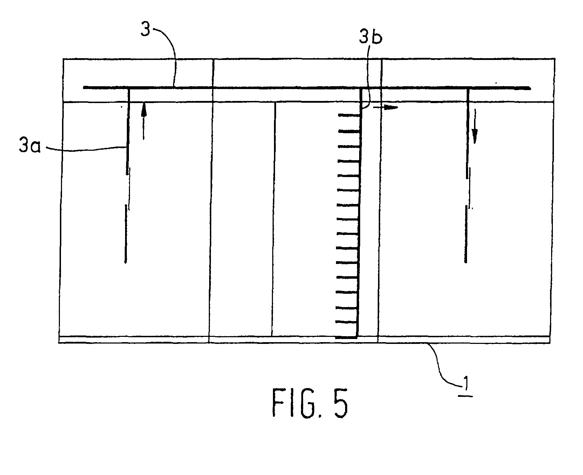

This is schematically shown in Figure 5, in which only the system 3-3a-3b for supplying power to the various modules is shown for the sake of clarity. In fact, the entire system through which the power for the modules is passed can be characterized by watt losses given out to the interior of the switchboard cabinet, which losses accordingly cause a particular temperature increase in each compartment. The arithmetic model can be adjusted for this phenomenon, too, so that a representative calculation of the temperature management in the switchboard cabinet can be obtained.

## Claims

1. A method for arranging a switchboard installation suitable for distributing electrical power to a system of power consumers forming part of one or more electrical circuits, to which end the switchboard installation is built up of a number of electrical modules arranged in a specific combination, which may or may not be present in compartments of a switchboard configuration, for example a switchboard cabinet, which modules influence the operating temperature in the switchboard installation by generating and emitting heat, **characterized in that** each type of module of which the switchboard installation is built up is considered to be a source of heat caused by watt losses that are known in advance, whose thermal influence on the switchboard installation under nominal load conditions is laid down in temperature arrays, which temperature arrays help to form a thermal model, on the basis of which it is possible to derive the change in the temperature that will occur in each of the modules in the switchboard cabinet as being in use with any desired configuration of the switchboard installation.

2. A method according to claim 1, **characterized in that** the derived temperature change is used in arranging the electrical switching and/or distribution units in the compartments of the switchboard cabinet in such a manner that a predetermined operating temperature will not be exceeded during operation when using the configuration in question.

3. A method according to claim 1 or 2, **characterized in that** parts of the switchboard cabinet and each type of unit are reduced to a heat source and/or a thermal resistor for the purpose of composing the system of thermal factors.

4. A method according to any one of the preceding claims, **characterized in that** the partial change in the operating temperature in a switchboard installation is established at at least two different compartment locations within the switchboard installation in question for each type of module for the purpose of setting up said thermal model.

5. A method according to claim 4, **characterized in that** each type of unit is present in at least two compartments of the switchboard cabinet in question, the unit carrying the nominal current associated with said unit is loaded and the temperatures in the unit in question, as well as in all the other similarly sized compartments in the same vertical or horizontal row, are laid down in two arrays of measurement results.

6. A method according to claim 5, **characterized in that** said two compartments are the uppermost and the lowermost compartment.

7. A method according to claim 5 or 6, **characterized in that** said compartments are arranged in the form of a matrix.

8. A method according to any one or more of the claims 4 - 7, **characterized in that** a change in the watt losses of a specific unit will lead to a proportional change in the temperature array for the unit in question.

9. A method according to claim 8, **characterized in that** the change in the watt losses, and consequently in the temperature array, is caused by the use of a different type of component in the unit in question.

10. A method according to any one or more of the claims 4 - 7, **characterized in that** a temperature sensor is placed at least in the compartment in question.

11. A method according to any one or more of the claims 4 - 7, **characterized in that** furthermore every other compartment is fitted with a unit, which may or may not be a random type, which is not in operation.

12. A method according to any one of the preceding claims, **characterized in that** the derived change in the operating temperature may be an increase or a decrease in the temperature, and **in that** said predetermined, desired operating temperature may be a minimally desired temperature or a maximally desired temperature.

13. A computer comprising input means, memory means, data storage means, data processing means, display means as well as a control program arranged for carrying out the method according to any one or more of the claims 1 - 12.

14. A data carrier capable of being read by a computer, which data carrier comprises a control program arranged for carrying out the method according to any one or more of the claims 1 - 12.

## Patentansprüche

1. Verfahren zum Anordnen einer Schalttafeleinrichtung, die zum Verteilen von elektrischem Strom an ein System von Stromverbrauchern, die einen Teil von einem oder mehreren elektrischen Stromkreisen bilden, geeignet ist, an dessen Ende die Schalttafeleinrichtung aus einer Anzahl von in einer spezifischen Kombination angeordneten elektrischen Modulen aufgebaut ist, die in Fächer einer Schalttafelanordnung, zum Beispiel in einem Schaltschrank, vorhanden sein kann oder nicht, deren Module die Betriebstemperatur in der Schalttafeleinrichtung durch Erzeugen und Ausstrahlen von Wärme beeinflussen, **dadurch gekennzeichnet, dass** jede Art von Modul, aus dem die Schalttafeleinrichtung aufgebaut ist, als eine Wärmequelle angesehen wird, die durch Leistungsverluste, die im Voraus bekannt sind, verursacht wird, deren Wärmeeinwirkung auf die Schalttafeleinrichtung unter Nennleistungsbedingungen in Temperaturdatenfeldern abgelegt wird und deren Temperaturdatenfelder das Bilden eines thermischen Modells unterstützen, auf dem basierend es möglich ist, die Veränderung der Temperatur, die in jedem der Module im Schaltschrank auftreten wird, bei jeder gewünschten Konfiguration der Schalttafeleinrichtung abzuleiten.

2. Verfahren nach Anspruch 1, **dadurch gekennzeichnet, dass** die abgeleitete Temperaturveränderung beim Anordnen der elektrischen Schalt- und/oder Verteilereinheiten in den Fächern des Schaltschranks derart verwendet wird, dass eine vorbestimmte Betriebstemperatur während des Betriebs nicht überschritten wird, wenn die entsprechende Konfiguration verwendet wird.

3. Verfahren nach Anspruch 1 oder 2, **dadurch gekennzeichnet, dass** Teile des Schaltschranks und jede Art von Einheit auf eine Wärmequelle und/oder einen Thermistor zum Zweck des Bildens eines Systems von Wärmefaktoren reduziert werden.

4. Verfahren nach einem der vorhergehenden Ansprüche, **dadurch gekennzeichnet, dass** die partielle Veränderung der Betriebstemperatur in einer Schalttafeleinrichtung an mindestens zwei unterschiedlichen Orten der Fächer innerhalb der entsprechenden Schalttafeleinrichtung für jede Art von Modul zum Zweck des Aufstellens dieses thermischen Modells festgestellt wird.

5. Verfahren nach Anspruch 4, **dadurch gekennzeichnet dass** jede Art von Einheit in mindestens zwei Fächer des entsprechenden Schaltschranks vorhanden ist, die Einheit, die den Nennstrom trägt, der mit dieser Einheit verbunden ist, belastet wird, und die Temperaturen in der entsprechenden Einheit sowie in allen anderen Fächern mit ähnlicher Größe in der gleichen vertikalen oder horizontalen Reihe, in zwei Messergebnisdatenfelder abgelegt werden.

6. Verfahren nach Anspruch 5, **dadurch gekennzeichnet, dass** diese zwei Fächer das oberste und das unterste Fach sind.

7. Verfahren nach Anspruch 5 oder 6, **dadurch gekennzeichnet, dass** diese Fächer in der Form einer Matrix angeordnet sind.

8. Verfahren nach einem oder mehreren der Ansprüche 4 - 7, **dadurch gekennzeichnet, dass** eine Veränderung in den Leistungsverlusten einer bestimmten Einheit zu einer proportionalen Veränderung im Temperaturdatenfeld für die entsprechende Einheit führen wird.

9. Verfahren nach Anspruch 8, **dadurch gekennzeichnet, dass** die Veränderung in den Leistungsverlusten und infolgedessen im Temperaturdatenfeld, durch die Verwendung einer unterschiedlichen Art: von Komponente in der entsprechenden Einheit verursacht wird.

10. Verfahren nach einem oder mehreren der Ansprüche 4 - 7, **dadurch gekennzeichnet, dass** ein Temperatursensor mindestens im entsprechenden Fach angeordnet wird.

11. Verfahren nach einem oder mehreren der Ansprüche 4 - 7, **dadurch gekennzeichnet, dass** ferner jedes andere Fach mit einer Einheit ausgestattet ist, die von einer wahlfreien Art sein kann oder nicht, die nicht in Betrieb ist.

12. Verfahren nach einem der vorhergehenden Ansprüche, **dadurch gekennzeichnet, dass** die abgeleitete Veränderung in der Betriebstemperatur eine Steigerung oder eine Verringerung der Temperatur sein kann, und dass diese vorbestimmte, erwünschte Betriebstemperatur eine minimal erwünschte oder eine maximal erwünschte Temperatur sein kann.

13. Computer, der Eingabemittel, Speichermittel, Datenspeichermittel, Datenverarbeitungsmittel, Anzeigemittel sowie ein Steuerprogramm zum Ausführen des Verfahrens nach einem oder mehreren der Ansprüche 1 - 12 umfasst.

14. Datenträger, der die Fähigkeit besitzt, durch einen Computer gelesen zu werden, dessen Datenträger ein Steuerprogramm umfasst, das eingerichtet ist, um das Verfahren nach einem oder mehreren der Ansprüche 1 - 12 auszuführen.

## Revendications

1. Procédé pour agencer une installation de tableau électrique adaptée pour alimenter en électricité un système de consommateurs de puissance faisant partie d'un ou de plusieurs circuits électriques, dans lequel l'installation de tableau électrique est constituée d'un certain nombre de modules électriques agencés en une combinaison spécifique, qui peuvent être ou peuvent ne pas être présents dans des compartiments d'une configuration de tableau électrique, par exemple, une armoire de tableau électrique, lesquels modules influencent la température de fonctionnement dans l'installation de tableau électrique en générant et en émettant de la chaleur, **caractérisé en ce que** chaque type de module qui constitue l'installation de tableau électrique est considéré comme étant une source de chaleur provoquée par des pertes de puissance qui sont connues à l'avance, dont l'influence thermique sur l'installation de tableau électrique dans des conditions de charge nominale est établie dans des tableaux de températures, lesquels tableaux de températures aident à former un modèle thermique, sur la base duquel il est possible de déduire la variation de température qui se produira dans chacun des modules dans l'armoire de tableau électrique tels qu'utilisés dans n'importe quelle configuration souhaitée de l'installation de tableau électrique.

2. Procédé selon la revendication 1, **caractérisé en ce que** la variation de température déduite est utilisée pour agencer les unités de commutation et/ou de distribution électriques dans les compartiments de l'armoire de tableau électrique de manière à ce qu'une température de fonctionnement prédéterminée ne soit pas dépassée pendant le fonctionnement lors de l'utilisation de la configuration en question.

3. Procédé selon la revendication 1 ou 2,
**caractérisé en ce que** des parties de l'armoire de tableau électrique et chaque type d'unité sont réduits à une source de chaleur et/ou une résistance thermique en vue de composer le système de facteurs thermiques.

4. Procédé selon l'une quelconque des revendications précédentes, **caractérisé en ce que** la variation partielle de la température de fonctionnement dans une installation de tableau électrique est établie à au moins deux emplacements de compartiments différents dans l'installation de tableau électrique en question pour chaque type de module en vue de créer ledit modèle thermique.

5. Procédé selon la revendication 4, **caractérisé en ce que** chaque type d'unité est présent dans au moins deux compartiments de l'armoire de tableau électrique en question, l'unité transportant le courant nominal associé à ladite unité est chargée et les températures de l'unité en question, ainsi que dans tous les autres compartiments de dimension similaire dans la même rangée verticale ou horizontale, sont établies dans deux tableaux de résultats de mesure.

6. Procédé selon la revendication 5, **caractérisé en ce que** lesdits deux compartiments sont les compartiments supérieur et inférieur.

7. Procédé selon la revendication 5 ou 6, **caractérisé en ce que** lesdits compartiments sont agencés sous la forme d'une matrice.

8. Procédé selon l'une quelconque ou plus des revendications 4 à 7, **caractérisé en ce qu'**une variation des pertes de puissance d'une unité spécifique conduira à une variation proportionnelle dans le tableau de températures pour l'unité en question.

9. Procédé selon la revendication 8, **caractérisé en ce que** la variation des pertes de puissance, et par conséquent dans le tableau de températures, est provoquée par l'utilisation d'un type différent de composant dans l'unité en question.

10. Procédé selon l'une quelconque ou plus des revendications 4 à 7, **caractérisé en ce qu'**un capteur de température est placé au moins dans le compartiment en question.

11. Procédé selon l'une quelconque ou plus des revendications 4 à 7, **caractérisé en ce que**, de plus, chaque autre compartiment est équipé d'une unité, qui peut être ou peut ne pas être d'un type aléatoire, qui n'est pas en fonctionnement.

12. Procédé selon l'une quelconque des revendications précédentes, **caractérisé en ce que** la variation déduite de la température de fonctionnement peut être une augmentation ou une diminution de la température, et **en ce que** ladite température de fonctionnement prédéterminée souhaitée peut être une température souhaitée au minimum ou une température souhaitée au maximum.

13. Ordinateur comprenant des moyens d'entrée, des moyens formant mémoire, des moyens de mémorisation de données, des moyens de traitement de données, des moyens d'affichage ainsi qu'un programme de commande agencé pour exécuter le procédé selon l'une quelconque ou plus des revendications 1 à 12.

14. Support de données capable d'être lu par un ordinateur, lequel support de données comprend un programme de commande agencé pour exécuter le procédé selon l'une quelconque ou plus des revendications 1 à 12.
